# EUROPÄISCHE PATENTANMELDUNG

(11) **EP 0 572 832 A1**
(43) Veröffentlichungstag der Anmeldung: **08.12.1993**
(21) Anmeldenummer: 93107770.5
(22) Anmeldetag: 13.05.1993
(51) Int. Cl.: A47J 31/54

(54) **Kaffee- oder Teemaschine mit einer Entkalkungsanzeigevorrichtung**

(30) Priorität: 04.06.1992 DE 4218440
(71) Anmelder: Melitta Haushaltsprodukte GmbH & Co. Kommanditgesellschaft, D-32371 Minden (DE)
(72) Erfinder: Ammann, Guido, Dipl.-Ing. Dr., W-3201 Diekholzen (DE)
(74) Vertreter: Stracke, Alexander, Dipl.-Ing.

(57) **Zusammenfassung**

Eine Entkalkungsanzeigevorrichtung einer Kaffee- oder Teemaschine weist eine Anzeigelampe (13) auf, die bei einem thermischen Schalter (15) einschaltbar ist. Diesem thermischen Schalter (15) sind zwei Heizwiderstände (16 u. 17) benachbart. Der Heizwiderstand (17) ist mit dem thermischen Schalter (15) in Reihe geschaltet. Der andere Heizwiderstand (16) wird über einen weiteren thermischen Schalter (14) geschaltet, der im Umgebungsbereich eines Heizaggregates (3) eines Durchlauferhitzers liegt.

Die Heizleistung des Heizwiderstandes (16) ist derart bemessen, daß der thermische Schalter (15) der Anzeigelampe (13) nur dann eingeschaltet wird, wenn der thermische Schalter (14) infolge eines Verkalkungszustandes des Durchlauferhitzers über einen relativ langen Zeitraum während des Brühprozesses eingeschaltet wird. Der Heizwiderstand (17) weist eine den thermischen Schalter (15) in Einschaltstellung haltende Heizleistung auf, so daß die Anzeigelampe (13) noch nach dem Ende des Brühprozesses bis zum Abschalten der gesamten Maschine aufleuchtet.

## Beschreibung

Die vorliegende Erfindung betrifft eine Kaffee- oder Teemaschine mit einem aus einem wasserführenden Durchlaufrohr und einem Heizaggregat bestehenden Durchlauferhitzer und einer Entkalkungsanzeigevorrichtung, wobei die Entkalkungsanzeigevorrichtung eine in eine Gehäusewandung angeordnete Anzeigelampe aufweist, welche bei einem Temperaturanstieg im Umgebungsbereich des Durchlauferhitzers infolge einer Verkalkung des Durchlaufrohres eingeschaltet wird.

Kaffee- oder Teemaschinen der vorerwähnten Art sind ansich bekannt.

Die Entkalkungsanzeigevorrichtung dient dem Zweck, dem Benutzer optisch zu signalisieren, daß eine Verkalkung des Durchlaufrohres vorliegt und entsprechend eine Entkalkung der wasserführenden Teile durchgeführt werden sollte.

Die bislang bekannten Kaffee- oder Teemaschinen der gattungsgemäßen Art weisen den Nachteil auf, daß die Anzeigelampe auch dann aufleuchtet, wenn die Brühphase beendet ist und das Heizaggregat des Durchlauferhitzers nur noch die Aufgabe erfüllt, eine Warmhalteplatte der Kaffee- oder Teemaschine zu erwärmen. Um diesen Nachteil zu beheben, hat man bislang einen Niveauschalter oder einen Schwimmer verwendet, der die Anzeige bei entleertem Frischwasserbehälter unterbricht oder verdeckt.

Unabhängig hiervon bleibt der Nachteil bestehen, daß die Anzeigelampe nur bis zum Ende des Brühprozesses aufleuchtet. Da nun im allgemeinen ein Benutzer einer derartigen Kaffee- oder Teemaschine während des Brühvorganges die Kaffee- oder Teemaschine nicht im Blickfeld hat, wird er über den Verkalkungszustand seines Gerätes nicht informiert.

Der vorliegenden Erfindung liegt die Aufgabe zugrunde, eine Kaffee- oder Teemaschine der gattungsgemäßen Art mit geringstmöglichem Aufwand so zu gestalten, daß die Anzeigelampe der Entkalkungsanzeigevorrichtung auch nach Ende des Brühprozesses und ausschließlich bei verkalktem Durchlaufrohr aufleuchtet.

Diese Aufgabe wird erfindungsgemäß dadurch gelöst, daß die Anzeigelampe über einen thermischen Schalter einschaltbar ist, dem zwei Heizwiderstände zugeordnet sind, von denen einer über einen im Bereich des Durchlauferhitzers angeordneten zweiten thermischen Schalter einschaltbar ist und hinsichtlich seiner Heizleistung derart bemessen ist, daß der thermische Schalter der Anzeigelampe ausschließlich bei verkalktem Durchlaufrohr und damit schon zu Beginn der Brühwassererzeugung eintretendem Temperaturanstieg im Umgebungsbereich des Durchlauferhitzters anspricht, während der andere Heizwiderstand mit dem thermischen Schalter der Anzeigelampe in Reihe geschaltet ist und eine den thermischen Schalter in Einschaltstellung haltende Heizleistung aufweist.

Durch diese relativ einfachen und auch kostengünstigen schaltungstechnischen Maßnahmen wird folgendes erreicht:

Eine Fehlanzeige der Entkalkungsanzeigevorrichtung wird verhindert, da ein Einschalten der Anzeigelampe nur dann erfolgen kann, wenn über einen längeren Zeitraum hinweg im Umgebungsbereich des Durchlauferhitzers eine erhöhte Temperatur auftritt, was ausschließlich dann der Fall ist, wenn das Durchlaufrohr verkalkt ist. Liegt allerdings ein Verkalkungszustand vor, wird durch die relativ lange Einschaltdauer des im Umgebungsbereich des Durchlauferhitzers angeordneten thermischen Schalters der mit ihm verbundene Heizwiderstand derart erwärmt, daß der thermische Schalter der Anzeigelampe anspricht. Gleichzeitig wird damit der mit diesem thermischen Schalter in Reihe geschaltete weitere Heizwiderstand eingeschaltet, der hinsichtlich seiner Leistung derart bemessen ist, daß die Anzeigelampe in Einschaltstellung bleibt, auch wenn der im Umgebungsbereich des Durchlauferhitzers angeordnete thermische Schalter ausgeschaltet wird. Dies bedeutet in der Praxis, daß eine Einschaltung der Anzeigelampe der Entkalkungsanzeigevorrichtung nur dann eintreten kann, wenn tatsächlich eine Verkalkung des Durchlaufrohres vorliegt und daß diese Anzeigelampe insbesondere auch dann aufleuchtet, wenn der Brühprozeß schon abgeschlossen ist.

Weitere Merkmale der Erfindung sind Gegenstand von Unteransprüchen.

Ein Ausführungsbeispiel der Erfindung ist in den beigefügten Zeichnungen dargestellt und wird im folgenden näher beschrieben.

Es zeigen:
- Figur 1: eine schematisch dargestellte Ansicht einer erfindungsgemäßen Kaffee- oder Teemaschine,
- Figur 2: ein schematisch dargestelltes Schaltbild der elektrischen Bausteine einer Entkalkungsanzeigevorrichtung der Kaffee- oder Teemaschine nach Figur 1,
- Figur 3: die in Figur 2 mit III bezeichnete Baugruppe in bildlicher Darstellung.

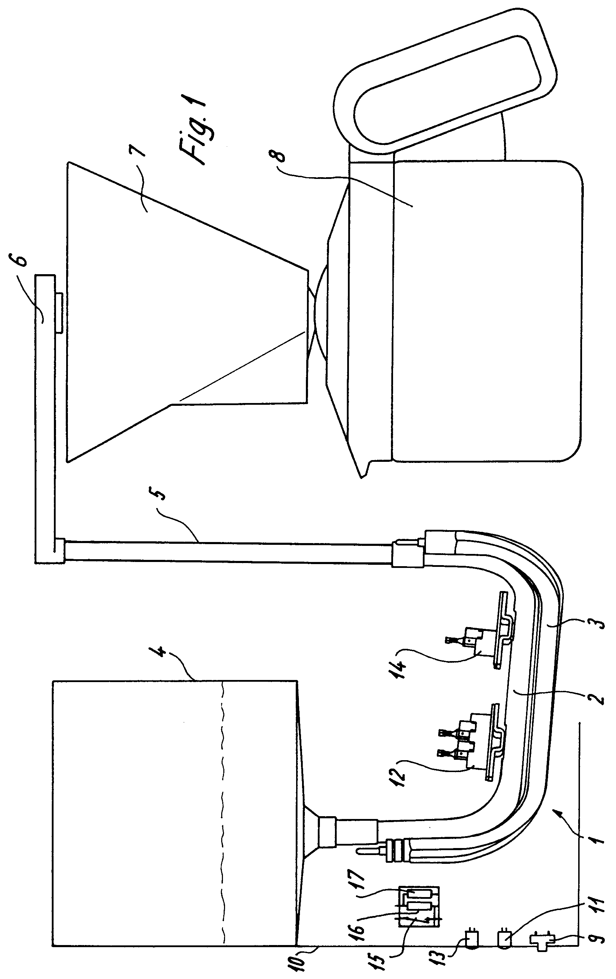

Die in Figur 1 schematisch dargestellte Kaffee- oder Teemaschine weist einen Durchlauferhitzer 1 auf, der aus einem wasserführenden Durchlaufrohr 2 sowie einem Heizaggregat 3 besteht. Über den Durchlauferhitzer 1 wird in einem Frischwasserbehälter 4 bevorratetes Kaltwasser erhitzt und über ein Steigrohr 5 sowie ein Überlaufrohr 6 in ein Filtergefäß 7 gefördert, welches sich oberhalb einer Aufnahmekanne 8 für das Filtrat befindet.

Das Heizaggregat 3 ist elektrisch betrieben und wird über einen Hauptschalter 9 eingeschaltet. Der Einschaltzustand wird über eine in einer Gehäusewandung 10 angeordnete Lampe 11 angezeigt.

Nach Ende des Brühprozesses wird das Heizaggregat zur Erwärmung einer nicht weiter dargestellten Warmhalteplatte benutzt, dabei wird das Heizaggregat 3 über einen Thermostaten 12 gesteuert.

Die Kaffee- oder Teemaschine gemäß Figur 1 ist mit einer Entkalkungsanzeigevorrichtung versehen, deren für einen Benutzer wesentlichstes Bauteil eine Anzeigelampe 13 ist, die ebenfalls in einer Gehäusewandung 10 angeordnet ist.

Die Entkalkungsanzeigevorrichtung weist weiterhin einen im Umgebungsbereich des Heizaggregates 3 angeordneten thermischen Schalter 14, einen weiteren thermischen Schalter 15 und zwei Heizwiderstände 16, 17 auf.

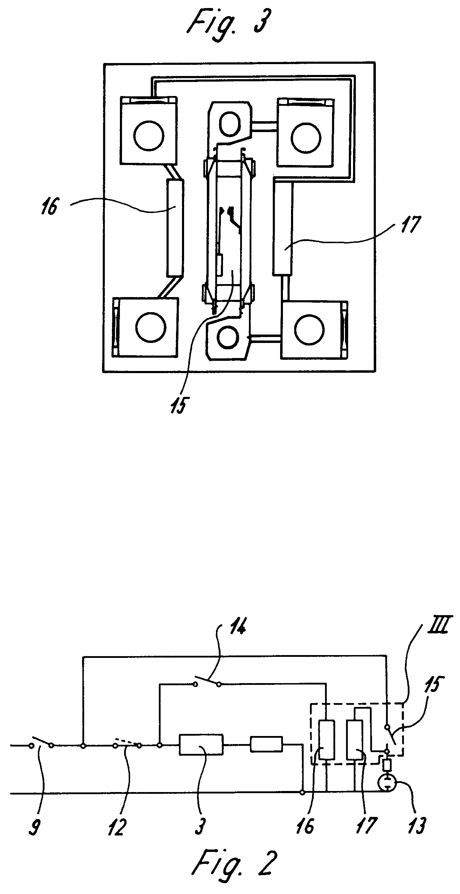

Aus dem Schaltbild gemäß Figur 2 ergibt sich der schaltungstechnische Aufbau und die Wirkungsweise der Entkalkungsanzeigevorrichtung.

Figur 2 macht deutlich, daß der thermische Schalter 15 mit dem Heizwiderstand 17 in Reihe geschaltet ist. Dies bedeutet, daß dieser Heizwiderstand 17 nur dann eingeschaltet ist, wenn der thermische Schalter 15 geschlossen und damit auch die Anzeigelampe 13 eingeschaltet ist.

Der andere Heizwiderstand 16 wird über den im Umgebungsbereich des Heizaggregates 3 liegenden thermischen Schalter 14 geschaltet.

Wird über den Hauptschalter 9 die Kaffee- oder Teemaschine in Betrieb genommen, beginnt die Erwärmung des Frischwassers.

Bei nichtverkalktem Durchlaufrohr 2 ist der Wärmeübergang zwischen Heizaggregat 3 und Durchlaufrohr 2 derart gut, daß der thermische Schalter 14 noch nicht anspricht. Erreicht das Heizaggregat 3 nach Brühende eine höhere Temperatur, spricht infolge der kurzfristig auftretenden Temperaturerhöhung der thermische Schalter 14 an, und dabei wird, bis der thermische Schalter 12 das Heizaggregat 3 vorübergehend abschaltet, der Heizwiderstand 16 aktiviert. Die kurze Einschaltdauer des thermischen Schalters 14 reicht aber noch nicht aus, um den im Umgebungsbereich des Heizwiderstandes 16 liegenden thermischen Schalter 15 der Anzeigelampe 13 einzuschalten.

Erst dann, wenn das Durchlaufrohr 2 verkalkt ist, wird durch den vom schlechteren Wärmeübergang zwischen Heizaggregat 3 und Durchlaufrohr 2 verursachten Temperaturanstieg im Umgebungsbereich des Heizaggregates 3 der thermische Schalter 14 schon frühzeitig in Schließstellung gebracht. Dies bewirkt eine relativ lange Einschaltdauer dieses thermischen Schalters 14 während der Brühzeit und damit eine lange Heizphase des Heizwiderstandes 16. Diese reicht nun aus, um den thermischen Schalter 15 der Anzeigelampe 13 zu schließen, so daß die Anzeigelampe 13 eingeschaltet ist. Gleichzeitig liegt damit der Heizwiderstand 17 in Einschaltstellung und die Heizleistung dieses Heizwiderstandes 17 ist so ausgelegt, daß nun der thermische Schalter 15 auch in Einschaltstellung gehalten wird, wenn der andere Heizwiderstand 16 vorübergehend ausgeschaltet wird. Dies bedeutet, daß die Anzeigelampe 13 auch dann eingeschaltet bleibt, wenn der thermische Schalter 12 des Heizaggregates 3 während der Warmhaltephase ausgeschaltet und somit auch der thermische Schalter 14 des Heizwiderstandes 16 vorübergehend ausgeschaltet wird.

Andererseits wird die Anzeigelampe 13 zuverlässig auch nur dann eingeschaltet, wenn tatsächlich eine Verkalkung des Durchlaufrohres 2 vorliegt.

Die thermischen Schalter 14 und 15 können, wie Figur 3 beispielhaft zeigt, als Bimetallschalter ausgebildet sein. Ebenso können aber auch NTC-Widerstandselemente als thermische Schalter 14 und 15 Verwendung finden.

## Patentansprüche

1. Kaffee- oder Teemaschine, mit einem aus einem wasserführenden Durchlaufrohr und einem Heizaggregat bestehenden Durchlauferhitzer und einer Entkalkungsanzeigevorrichtung, wobei die Entkalkungsanzeigevorrichtung eine in einer Gehäusewandung angeordnete Anzeigelampe aufweist, welche bei einem Temperaturanstieg im Umgebungsbereich des Durchlauferhitzers infolge einer Verkalkung des Durchlaufrohres eingeschaltet wird, **dadurch gekennzeichnet,** daß die Anzeigelampe (13) über einen thermischen Schalter (15) einschaltbar ist, dem zwei Heizwiderstände (16,17) zugeordnet sind, von denen einer (16) über einen im Bereich des Durchlauferhitzers (1) angeordneten zweiten thermischen Schalter (14) einschaltbar ist und hinsichtlich seiner Heizleistung derart bemessen ist, daß der thermische Schalter (15) der Anzeigelampe (13) ausschließlich bei verkalktem Durchlaufrohr (2) und damit schon zu Beginn der Brühwassererzeugung eintretendem Temperaturanstieg im Umgebungsbereich des Durchlauferhitzers (1) anspricht, während der andere Heizwiderstand (17) mit dem thermischen Schalter (15) der Anzeigelampe (13) in Reihe geschaltet ist und eine den thermischen Schalter (15) in Einschaltstellung haltende Heizleistung aufweist.

2. Entkalkungsanzeigevorrichtung nach Anspruch 1, dadurch gekennzeichnet, daß die thermischen Schalter (14, 15) aus Bimetallschaltern bestehen.

3. Entkalkungsanzeigevorrichtung nach Anspruch 1, dadurch gekennzeichnet, daß die thermischen Schalter (14, 15) aus NTC-Widerstandselementen bestehen.
